# EUROPEAN PATENT APPLICATION

(11) **EP 4 653 302 A1**
(43) Date of publication of application: **26.11.2025**
(21) Application number: 25173144.4
(22) Date of filing: 29.04.2025
(51) Int. Cl.: B62J 35/00, B62J 41/00, B62J 43/16, B62J 43/20, B62K 11/04, B62M 7/02, B62M 23/02

(54) **MOTORCYCLE**

(30) Priority: 21.05.2024 JP 2024082789; 13.11.2024 JP 2024198243
(71) Applicant: Kawasaki Motors, Ltd., Akashi, Hyogo 673-8666 (JP)
(72) Inventor: TAKEUCHI, Hiroshi, Akashi-shi, HYOGO, 673-8666 (JP)
(74) Representative: Dr. Gassner & Partner mbB

(57) **Abstract**

A motorcycle of the present disclosure includes: a combustion engine E serving as a driving source; a vehicle body frame FR providing support for the combustion engine E; and a battery 60 which is disposed in front of the combustion engine E and is charged with power from the combustion engine E. The vehicle body frame FR includes a pair of left and right frame pieces 1b. The battery 60 is positioned between the left and right frame pieces 1b when viewed in a plan view and has a portion overlapping with the frame pieces 1b when viewed in a side view.

## Description

### BACKGROUND OF THE INVENTION

### (Field of the Invention)

The present disclosure relates to a motorcycle which comprises at least one driving source, one of which is a combustion engine.

### (Description of Related Art)

It has been known that motorcycles comprise: at least combustion engine as a one driving source; and a battery (for example, WO2019/235037 A1). Specifically, the battery is charged with electricity generated by a generator using mechanical power of the combustion engine. Examples of the battery include a battery for powering a control system and a battery for powering an electric motor serving as a motorcycle driving source.

Protection against external forces and the provision of secure cooling performance are required for such a battery when a motorcycle is equipped with the same.

### SUMMARY OF THE INVENTION

The disclosure of the instant application provides a motorcycle comprising a battery that is protected against external forces and can be cooled effectively.

In one aspect, the present disclosure provides a motorcycle which includes: a combustion engine serving as a driving source; a vehicle body frame providing support for the combustion engine; and a battery which is disposed in front of the combustion engine and is charged with power from the combustion engine. The vehicle body frame includes a pair of left and right frame pieces. The battery is positioned between the left and right frame pieces when viewed in a plan view and has a portion overlapping with the frame pieces when viewed in a side view.

According to a motorcycle in accordance with the present disclosure, the battery is positioned between the left and right frame pieces when viewed in a plan view and has a portion overlapping with the frame pieces when viewed in a side view. Thus, the frame pieces protect the battery against external forces from a side of the vehicle body. Further, the battery can be cooled effectively by winds during travel, since the battery is disposed in front of the combustion engine.

Any combinations of at least two features disclosed in the claims and/or the specification and/or the drawings should also be construed as encompassed by the present disclosure. Especially, any combinations of two or more of the claims should also be construed as encompassed by the present disclosure.

### BRIEF DESCRIPTION OF THE DRAWINGS

The present disclosure will be more clearly understood from the following description of preferred embodiments made with reference to the accompanying drawings. However, the embodiments and the drawings are given merely for the purpose of illustration and explanation, and should not be used to delimit the scope of the present disclosure, which scope is to be delimited by the appended claims. In the accompanying drawings, alike numerals are assigned to and indicate alike parts throughout the different figures:
Fig. 1 is a right side view of a motorcycle in accordance with a first embodiment of the present disclosure;
Fig. 2 is a left side view of the motorcycle;
Fig. 3 is a plan view of the motorcycle;
Fig. 4 is a side view of a detail of Fig. 1 on an enlarged scale; and
Fig. 5 is a left side view of a variant of the motorcycle.

### DESCRIPTION OF EMBODIMENTS

What follows is a description of a preferred embodiment of the present disclosure made with reference to the drawings. The terms "right" and "left" herein refer to the "right" and "left" as viewed from a driver seated in or on a vehicle. Thus, a left-to-right or right-to-left direction coincides with a vehicle widthwise direction. Further, the terms "front" and "rear" refer to the "front" and "rear" in the direction of travel of a vehicle. Thus, the longitudinal direction of a vehicle body coincides with a front-to-rear direction for the vehicle. In connection with a vehicle widthwise direction, the terms "widthwise inside" and "widthwise outside" refer to a side facing towards and a side facing away from a vehicle body centerline which runs in the front-to-rear direction of a vehicle, respectively.

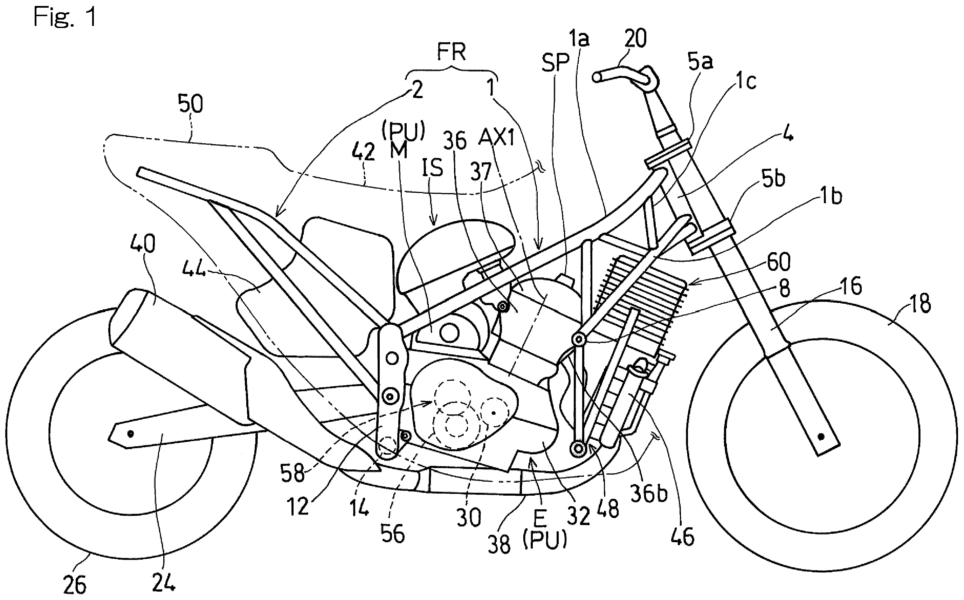

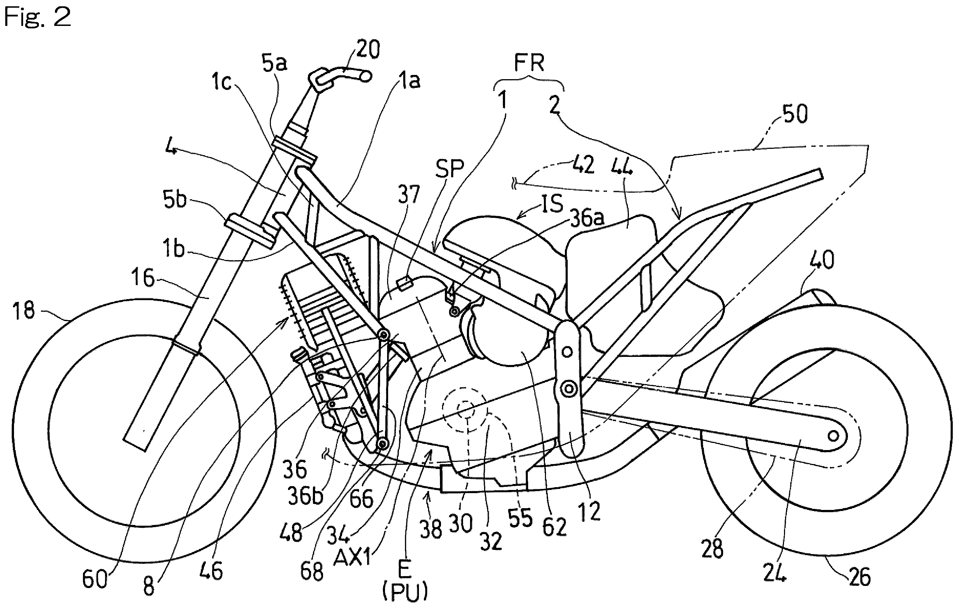

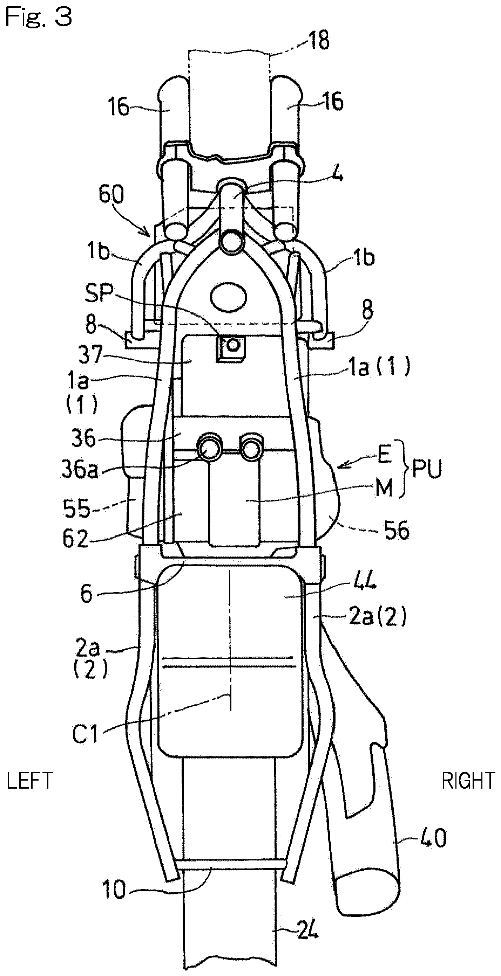

Fig. 1 is a right side view of a motorcycle in accordance with a first embodiment of the present disclosure, and Figs. 2 and 3 are a left side view and a plan view of the same, respectively. Referring to Fig. 1, a motorcycle of the instant embodiment comprises a power unit PU that includes an internal combustion engine E and electric motor M which represent first and second power sources, respectively. Hence, the motorcycle of the instant embodiment can be driven by using only the combustion engine E which is in short for the internal combustion engine E, only the electric motor M, or the combustion engine E and the electric motor M at the same time, depending on which driving mode is relied on.

In the instant embodiment, the motorcycle comprises a vehicle body frame FR which represents a frame assembly of frame members joined by welding. The vehicle body frame FR includes a main frame 1 and rear frame 2 which form the front half and rear half of the same, respectively. The main frame 1 includes a head pipe 4 at a front end thereof and extends rearwards therefrom in a downwardly slanted manner. The rear frame 2 extends rearwards from the rear end of the main frame 1 in an upwardly slanted manner.

The main frame 1 includes first frame pieces 1a which extend rearwards from the upper portion of the head pipe 4 and second frame pieces 1b which extend rearwards from the lower portion of the head pipe 4. The main frame 1 further includes a plurality of reinforcement frame pieces 1c which connect the first frame pieces 1a and the second frame pieces 1b.

Referring to Fig. 3, there are a pair of left and right first frame pieces 1a and a pair of left and right second frame pieces 1b. The left and right first frame pieces 1a, 1a are connected at rear ends thereof by a first cross frame 6 which extends in a vehicle widthwise direction. Each of the second frame pieces 1b has a rear end which is provided with a combustion engine mount part 8. In the instant embodiment, the combustion engine mount parts 8 comprise cylindrical members which have axes in the vehicle widthwise direction.

The rear frame 2 has a front end that is coupled to the first cross frame 6, and extends rearwards from the first cross frame 6. The rear frame 2 likewise includes a pair of left and right rear frame pieces 2a, 2a which have rear ends connected by a second cross frame 10 that extends in the vehicle widthwise direction.

Referring back to Fig. 1, the rear end of the main frame 1 is coupled to pivot frames 12 which form part of the vehicle body frame FR. There are a pair of left and right pivot frames 12, each formed of a planar member which extends in a vertical direction. The left and right pivot frames 12 have upper ends that are connected by the first cross frame 6 and lower ends that are connected by a third cross frame 14 which extends in the vehicle widthwise direction.

The head pipe 4 provides support for a front fork 16 via an upper bracket 5a and an under bracket 5b. The front fork 16 has a lower end at which a front wheel 18 is supported. The front fork 16 has an upper end at which a handlebar 20 is attached. Swingarms 24 are pivotably supported at the pivot arms 12 so as to swing up and down. The swingarms 24 have rear ends at which a rear wheel 26 is attached.

The combustion engine E is disposed below the main frame 1 and between the front wheel 18 and the rear wheel 26. Mechanical power from the combustion engine E is transferred through a power transfer member 28, shown in Fig. 2, to the rear wheel 26 to drive the same. Examples of the power transfer member 28 include, but are not limited to, a drive chain.

Referring to Fig. 1, the combustion engine E includes: a crankshaft 30 which extends in the vehicle widthwise direction; a crankcase 32 which carries the crankshaft 30; a cylinder block 34 which projects upwards from the crankcase 32; and a cylinder head 36 which is coupled to the top of the cylinder block 34. The interiors of the cylinder block 34 and cylinder head 36 delimit a combustion chamber. In the instant embodiment, the cylinder block 34 and the cylinder head 36 define an axis AX1 which extends upwards in a forwardly slanted manner. In the instant embodiment, the combustion engine E including the crankcase 32, the cylinder block 34, and the cylinder head 36 is, geometrically speaking, formed in a generally L-shaped when viewed in a side view.

A cylinder head cover 37 is attached to and covers the upper side of the cylinder head 36. Further, the cylinder head 36 has a top wall with an ignition plug SP fitted thereto. The ignition plug SP is housed, for the most part, within the cylinder head cover 37.

The combustion engine is supported by the vehicle body frame FR as described above. Specifically, the cylinder head 36 has a front portion which is supported by the combustion engine mount parts 8 and a rear portion which is supported by the first frame pieces 1a of the main frame 1. In addition, the crankcase 32 has a rear end which is supported at upper and lower two portions thereof on the pivot frames 12. However, any other structure, in a non-limiting manner, may be used to support the combustion engine E.

The cylinder head 36 has a rear side formed with an intake port 36a (Fig. 2) and a front side formed with an exhaust port 36b. The intake port 36a connects to an intake system IS. The intake system IS feeds ambient air to the intake port 36a for use as intake air and includes, among others, an air cleaner and a throttle body.

The exhaust port 36b connects to an exhaust pipe 38. The exhaust pipe 38 extends rearwards below the combustion engine E and connects to an exhaust muffler 40 on the right side of the rear wheel 26. The exhaust muffler 40 attenuates the noise of exhaust gas from the exhaust pipe 38 and discharges the same to the environment.

Air taken though the intake system IS is introduced to the combustion chamber together with fuel via the intake port 36a. The air/fuel mixture introduced into the combustion chamber is ignited with the ignition plug SP for combustion. The exhaust gas from the combustion passes through the exhaust port 36b and via the exhaust pipe 38, and is discharged from the exhaust muffler 40.

The motorcycle also includes a seat 42 which allows a driver to be seated and a fuel tank 44 which stores fuel for the combustion engine E. The fuel tank 44 is disposed behind the combustion engine E and below the seat 42. Specifically, the fuel tank 44 is positioned between the left and right rear frames 2, 2 when viewed in the plan view of Fig. 3. As illustrated in Fig. 1, the seat 42 is disposed over the intake system IS and the fuel tank 44.

A radiator 46 is disposed in front of the combustion engine E. The radiator 46 uses winds during travel to dissipate heat from a coolant for the combustion engine E. Examples of the coolant include cooling water. In the instant embodiment, the radiator 46 is positioned substantially parallel to the axis AX1 of the cylinder block 23 when viewed in a side view. The radiator 46 is supported on the main frame 1 by means of a bracket 48. The structure used to support the radiator 46 will be discussed later.

The motorcycle of the instant embodiment includes a fairing 50 which is made from resin and externally covers the vehicle body, as represented by a two-dot chain line.

Referring now to Fig. 2, a generator 55 is arranged at one of the axial ends of the crankshaft 30 on one lateral side of the crankshaft 30 - namely, on the left side of the crankshaft 30 in the instant embodiment. In the instant embodiment, the generator 55 comprises an integrated starter generator (ISG). The generator 55 generates electricity from mechanical power of the combustion engine E, that is, rotations of the crankshaft 30.

Referring back to Fig. 1, a clutch 56 is arranged at the other of the axial ends of the crankshaft 30 on the other lateral side of the crankshaft 30 - namely, on the right side of the crankshaft 30 in the instant embodiment. The clutch 56 selectively allows and disallows the transmission of rotations of the crankshaft 30.

A transmission 58 is housed in a space within the crankcase 32 that is located rearwards of the crankshaft 30. That is, the crankcase 32 has a rear part which forms a transmission case in which the transmission 58 is received. The crankshaft 30 couples via the clutch 56 to an input shaft of the transmission 58, and an output shaft of the transmission 58 couples to the power transfer member 28. That is, rotations of the crankshaft 30 are transmitted to the rear wheel 26 with a changed speed after passing through the transmission 58.

The electric motor M is disposed behind the cylinder block 34 and above the crankcase 32. Specifically, the electric motor M is disposed above the crankcase 32 and behind the cylinder block 34 so as to be located forwards of the rear end of the crankcase 32. An output shaft of the electric motor M couples to the input shaft of the transmission 58. That is, rotations of the output shaft of the electric motor M are transmitted to the rear wheel 26 with a changed speed after passing through the transmission 58.

Via the link between the output shaft of the electric motor M and the input shaft of the transmission 58 on the downstream side of the clutch 56, the output power of the electric motor M is transferred and used as drive power. By disengaging the clutch 56, drive power can be obtained by relying solely on the electric motor. Once the clutch 56 is coupled, drive power can be obtained by using both the electric motor M and the combustion engine E. Upon stopping the electric motor M with the clutch 56 being coupled, drive power can be obtained with the combustion engine alone.

Referring again to Fig. 2, the motorcycle of the instant embodiment includes a drive battery 60 which powers the electric motor M and an inverter 62 which feeds power from the generator 55 to the drive battery 60. In the instant embodiment, the drive battery 60 is a 48V lithium-ion battery, or any other batteries may be used as the drive battery 60, in a non-limiting manner.

In the instant embodiment, the inverter 62 comprises an inverter integrated with a DC to DC converter. That is, in the instant embodiment, the inverter 62 feeds power from the generator 55 to the 48V drive battery 60 and to a battery having a lower voltage than the drive battery 60 and used for powering a control system. Examples of the battery used for powering a control system include a 12V lead-acid battery.

In the instant embodiment, the inverter 62 is disposed above the combustion engine E and adjacently to the electric motor M in the vehicle widthwise direction. Further, the inverter 62 is positioned on the opposite side from the exhaust muffler 40 in the vehicle widthwise direction across a centerline axis C1 which extends in the front-to-rear direction of the vehicle body. That is, the inverter 62 is arranged on the left side of the vehicle body, and the exhaust muffler 40 is arranged on the right side of the vehicle body. In the instant embodiment, the combustion engine E is located offset to the right side of the vehicle body from the centerline axis C1 of the vehicle body, and the inverter 62 is located in the space that is now unoccupied on the left side.

Power from the generator 55 is passed through the inverter 62 before feeding and charging the drive battery 60. Specifically, the generator 55 is an alternator which produces output that is converted to DC power by the inverter 62 before being fed to the drive battery 60. Power charged in the drive battery 60 is supplied to the electric motor M to drive the same.

During an electric driving mode and a hybrid driving mode, drive power from the electric motor M is transferred through the power transfer member 28 to the rear wheel 26. Moreover, at the time of start-up of the combustion engine, power is supplied from the drive battery 60 to the generator 55 to allow the generator 55 to function as a starter.

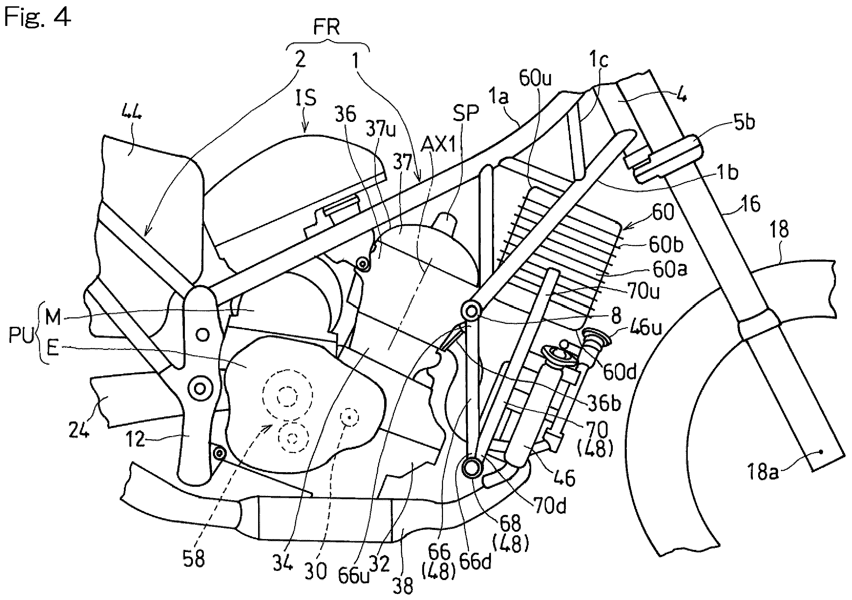

Referring to Fig. 4, in the instant embodiment, the drive battery 60 includes a box-shaped casing 60a and a plurality of cells enclosed therein. The casing 60a is made from metal, for example, aluminum alloy, or any other materials may be used for the casing 60a, in a non-limiting manner.

The casing 60a has an external surface on which cooling fins 60b are formed. The cooling fins 60b comprise projections disposed to provide a larger surface area which results in an improved heat exchange efficiency. In the instant embodiment, the casing 60 has opposite lateral faces and front and rear faces on which the cooling fins 60b are formed. Those cooling fins 60b on the opposite lateral faces extend in the front-to-rear direction. Those cooling fins 60b on the front and rear faces extend in the vehicle widthwise direction (or left-to-right direction).

The drive battery 60 is disposed in front of the combustion engine E. The drive battery 60 is positioned between the left and right second frame pieces 1b, 1b when viewed in the plan view shown in Fig. 3. The drive battery 60 also has a portion overlapping with the frame pieces 1b when viewed in the side view shown in Fig. 4.

The drive battery 60 is arranged in a non-overlapping position with the cylinder block 34 and the cylinder head 36 when viewed in the cylinder axis AX1 direction of the combustion engine E. In the instant embodiment, the drive battery 60 has an upper end 60u which is arranged at a higher position than the upper end 37u of the cylinder head cover 37 of the combustion engine E. Further, the drive battery 60 has a lower end 60d which is arranged at a higher position than the exhaust port 36b. Furthermore, the lower end 60d of the drive battery 60 is arranged at a higher position than the central axis 18a of the front wheel 18.

In the instant embodiment, the drive battery 60 has a front side extending downwards in a rearwardly slanted manner. Specifically, the front side of the drive battery 60 is arranged parallel to the front side of the radiator 46. In the instant embodiment, the drive battery 60 is disposed above the radiator 46. Further, the radiator 46 has an upper end 46u which is positioned forwards of the lower end 60d of the drive battery 60. An upper end portion of the front side of the drive battery 60 is positioned below the under bracket 5b. Thus, incoming wind is effectively introduced to the drive battery 60, resulting in improvement of cooling effect for the drive battery 60.

In the instant embodiment, the drive battery 60 is supported on the vehicle body frame FR by means of a battery stay (not shown). Specifically, the drive battery 60 is mounted on the battery stay which, in turn, is secured to the second frame pieces 1b of the vehicle body frame FR. Thus, the drive battery 60 is securely fastened to the second frame pieces 1b. For example, a plate-like battery stay bolted to the second frame pieces 1b is used to provide support for the drive battery 60 from below.

The bracket 48 includes a pair of left and right first bracket pieces 66, 66 which extend in the vertical direction and a second bracket piece 68 which connects the left and right first bracket pieces 66, 66. The second bracket piece 68 extends in the vehicle widthwise direction.

Referring now to Fig. 4, the left and right first bracket pieces 66 have upper ends 66u that are coupled to the left and right combustion engine mount parts 8, respectively, and lower ends 66d that are coupled to the second bracket piece 68. The second bracket piece 68 extends in the vehicle widthwise direction in front of the combustion engine E and behind the radiator 46 at a lower position than the radiator 46. The second bracket piece 68 has opposite ends in the vehicle widthwise direction, to which the lower ends 66d of the left and right first bracket pieces 66 are respectively coupled.

The bracket 48 also includes fourth bracket pieces 70 which extend in the vertical direction from the second bracket piece 68. There are a pair of left and right fourth bracket pieces 70, and each of the fourth bracket pieces 70 has a lower end 70d which is coupled to a respective one of the opposite ends of the second bracket piece 68 in the vehicle widthwise direction.

Each of the fourth bracket pieces 70 extends upwards from the second bracket piece 68. Specifically, each of the fourth bracket pieces 70 extends upwards from the second bracket piece 68 in a forwardly slanted manner. More specifically, each of the fourth bracket pieces 70 extends parallel to the drive battery 60 and the radiator 46.

The radiator 46 is supported by the left and right fourth bracket pieces 70 at intermediate portions thereof in the vertical direction. For example, the radiator 46 is secured to the fourth bracket pieces 70 with fastening members such as bolts.

Any other structure than that of the instant embodiment may be used to support the drive battery 60, in a non-limiting manner. For example, the drive battery 60 may be supported on the vehicle body frame FR by means of the bracket 48 which also provides support for the radiator 46.

According to the configuration as described above, the drive battery 60 is positioned between the left and right second frame pieces 1b, 1b when viewed in the plan view of Fig. 3 and has a portion overlapping with the second frame pieces 1b when viewed in the side view of Fig. 4. Thus, the second frame pieces 1b protect the drive battery 60 against external forces from a side of the vehicle body. Further, the drive battery 60 can be cooled effectively by winds during travel, since the drive battery 60 is disposed in front of the combustion engine E.

In the instant embodiment, the drive battery 60 is a lithium ion battery that powers the electric motor M which serves as a driving source. The lithium ion battery generates heat during discharge. When its cell temperature reaches an upper limit temperature, its discharge is interrupted with the object of battery protection. In the instant embodiment, the drive battery 60 can be cooled effectively by winds during travel, and temperature rise in the drive battery 60 can therefore be kept low. This prevents the drive battery 60 from reaching the upper limit temperature and can extend the discharge time of the same.

Further, more heat is generated by a battery in a hybrid vehicle, such as the one in the instant embodiment, at the time of switching from driving using the combustion engine E to driving using the motor M and in particular during travel involving a large discharge current. Hence, it is during travel that the demand for cooling the drive battery 60 is high. Thus, the instant embodiment implements a simple design that provides effective cooling of the drive battery 60 by enabling the drive battery 60 to be cooled using winds A during travel.

In the instant embodiment, the fuel tank 44 is disposed behind the combustion engine E and below the seat 42, as shown in Fig. 1. According to this configuration, a space for disposing a large drive battery 60 can be secured in such a location that also lets the large drive battery 60 be cooled effectively by winds during travel, by arranging the fuel tank 44 behind the combustion engine E.

In the instant embodiment, the drive battery 60 is arranged in a non-overlapping position with the cylinder block 34 and the cylinder head 36 when viewed in the cylinder axis AX1 direction of the combustion engine E. According to this configuration, maintenance of the ignition plug SP is not impeded by the drive battery 60 disposed in front of the combustion engine E,

In the instant embodiment, the radiator 46 is disposed in front of the combustion engine E and below the drive battery 60. According to this configuration, interference of the radiator 46 and the drive battery 60 can be avoided, allowing components in front of the combustion engine to be positioned in place in a compact manner.

In the instant embodiment, the upper end 46u of the radiator 46 is positioned forwards of the lower end 60d of the drive battery 60, as shown in Fig. 4. According to this configuration, the drive battery 60 can be protected against small rocks and the like flying off from the front wheel 18 during travel.

In the instant embodiment, the radiator 46 and the drive battery 60 may be supported on the vehicle body frame FR by means of a common bracket 48. According to this configuration, there is no need to provide a bracket dedicated to a battery, and it is possible to keep down any increase in the parts count.

In the instant embodiment, the upper end 60u of the drive battery 60 is arranged at a higher position than the upper end 37u of the cylinder head cover 37 of the combustion engine E. According to this configuration, more portions of the drive battery 60 are positioned at an upper position than the second frame pieces 1b when viewed in a side view, thereby allowing the drive battery 60 to be protected by the second frame pieces 1b more beneficially against external forces from a side of the vehicle body.

In the instant embodiment, the lower end 60d of the drive battery 60 is arranged at a higher position than the exhaust port 36b. According to this configuration, the drive battery 60 can be protected from the heat of exhaust gas discharged via the exhaust port 36b.

In the instant embodiment, the front side of the drive battery 60 extends downwards in a rearwardly slanted manner. According to this configuration, the drive battery 60 can be prevented from interfering with the front wheel 18 and the front fork 16

In the instant embodiment, the lower end 60d of the drive battery 60 is arranged at a higher position than the central axis 18a of the front wheel 18. According to this configuration, the drive battery 60 can be prevented from interfering with the front wheel 18 even when the front wheel 18 moves relative to the vehicle body during travel.

In the instant embodiment, the drive battery 60, that powers the electric motor M which serves as a driving source of the vehicle, is disposed in front of the combustion engine E, such that the drive battery 60 is positioned between the left and right frame pieces 1b, 1b when viewed in a plan view and has a portion overlapping with the frame pieces 1b when viewed in a side view. However, this is merely one of the non-limiting examples of a motorcycle according to the present disclosure, and a battery used for powering a control system may be disposed in front the combustion engine E, such that it is positioned between the left and right frame pieces 1b, 1b when viewed in a plan view and has a portion overlapping with the frame pieces 1b when viewed in a side view. In that case, the motorcycle may not comprise the electric motor M. That is, the motorcycle may not be hybrid and comprise only the combustion engine E as a driving source.

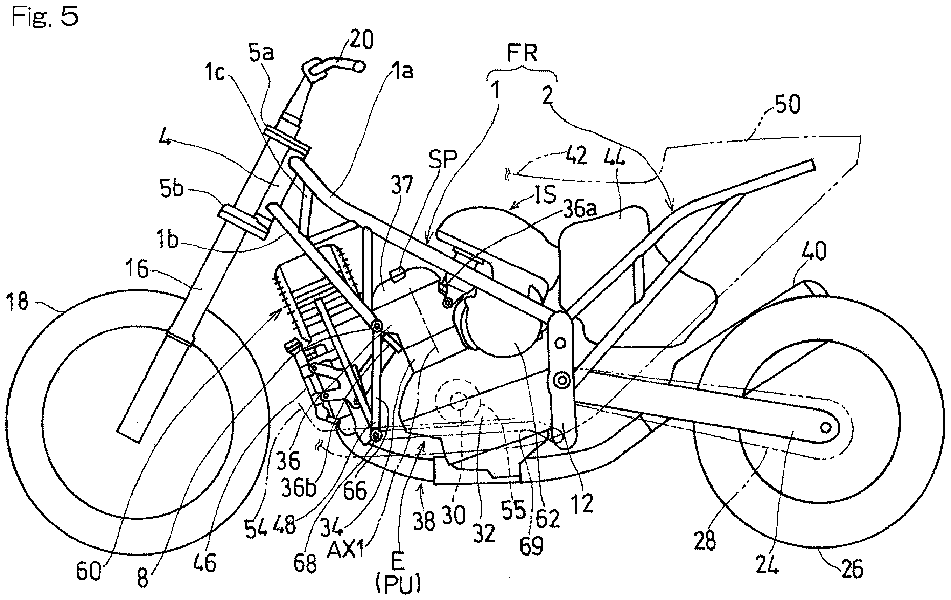

Fig. 5 is a side view of a motorcycle in accordance with a variant of the instant embodiment. A motorcycle according to the present disclosure may comprise foot rests 54 which allows a driver to place a foot of the driver, as represented by a two-dot chain line in Fig. 5. The foot rests 54 may be formed integrally with the fairing 50.

There are a pair of left and right foot rests 54 which are flat and plate-like elements that extend in the front-to-rear direction. The foot rests 54 are supported on the vehicle body frame FR by means of the bracket 48. In the instant embodiment, the foot rests 54 are supported on the vehicle body frame FR by means of a common bracket 48 with the radiator 46.

Specifically, the bracket 48 in Fig. 5 includes a pair of left and right third bracket pieces 69, 69, as represented by a two-dot chain line. The third bracket pieces 69 extend rearwards from the second bracket piece 68 and have rear ends that are coupled to lower ends of the pivot arms 12. The left and right foot rests 54 are supported on the left and right third bracket pieces 69, respectively. For example, the foot rests 54 are securely fastened to the third bracket pieces 69 with fastening members such as bolts.

In the variant of Fig. 5, the radiator 46, the foot rests 54, and the drive battery 60 are supported on the vehicle body frame FR by means of a common bracket 48. According to this configuration, there is no need to provide a bracket dedicated to a battery, and it is possible to keep down any increase in the parts count.

The foregoing is a non-limiting summary of the present disclosure, and various additions, modifications, or omissions can be made therein without departing from the principle of the present disclosure and are, thus, encompassed within the scope of the present disclosure.

## Claims

1. A motorcycle comprising:
a combustion engine serving as a driving source;
a vehicle body frame providing support for the combustion engine; and
a battery which is disposed in front of the combustion engine and is charged with power from the combustion engine, wherein:
the vehicle body frame includes a pair of left and right frame pieces; and
the battery is positioned between the left and right frame pieces when viewed in a plan view and has a portion overlapping with the frame pieces when viewed in a side view.

2. The motorcycle as claimed in claim 1, further comprising:
an electric motor serving as a driving source in addition to the combustion engine, the battery comprising a driving battery which powers the electric motor.

3. The motorcycle as claimed in claim 1 or 2, further comprising:
a seat which allows a driver to be seated; and
a fuel tank disposed behind the combustion engine and below the seat.

4. The motorcycle as claimed in any one of claims 1 to 3, wherein
the combustion engine includes: a crankcase carrying a crankshaft; a cylinder block projecting upwards from the crankcase; and a cylinder head coupled to a top of the cylinder block, and
the battery is arranged in a non-overlapping position with the cylinder block and the cylinder head when viewed in a cylinder axis direction of the combustion engine.

5. The motorcycle as claimed in any one of claims 1 to 4, further comprising:
a radiator which dissipates heat from cooling water for the combustion engine and disposed in front of the combustion engine and below the battery.

6. The motorcycle as claimed in claim 5, wherein the radiator has an upper end which is positioned forwards of a lower end of the battery.

7. The motorcycle as claimed in claim 5 or 6, wherein the radiator and the battery are supported on the vehicle body frame by means of a common bracket.

8. The motorcycle as claimed in any one of claims 1 to 7, wherein the battery has an upper end which is arranged at a higher position than an upper end of a cylinder head cover of the combustion engine.

9. The motorcycle as claimed in any one of claims 1 to 8, wherein
the combustion engine has a front side formed with an exhaust port, and
the battery has a lower end which is arranged at a higher position than the exhaust port.

10. The motorcycle as claimed in any one of claims 1 to 9, wherein the battery has a front side extending downwards in a rearwardly slanted manner.

11. The motorcycle as claimed in any one of claims 1 to 10, wherein the battery has a lower end which is arranged at a higher position than a central axis of a front wheel.

12. The motorcycle as claimed in any one of claims 1 to 11, further comprising:
a foot rest which allows a driver to place a foot of the driver, the foot rest and the battery being supported on the vehicle body frame by means of a common bracket.
